# EUROPEAN PATENT APPLICATION

(11) **EP 4 538 169 A1**
(43) Date of publication of application: **16.04.2025**
(21) Application number: 23842799.1
(22) Date of filing: 30.06.2023
(51) Int. Cl.: B63H 21/38, B63B 25/16, F17C 9/00, F17C 13/00

(54) **FLOATING BODY**

(30) Priority: 20.07.2022 JP 2022115204
(71) Applicant: Mitsubishi Shipbuilding Co., Ltd., Tokyo 108-8015 (JP)
(72) Inventor: YOSHINO Seigo, Yokohama-shi, Kanagawa 220-8401 (JP); HONDA Akihiro, Yokohama-shi, Kanagawa 220-8401 (JP)
(74) Representative: Studio Torta S.p.A.
(86) International application number: PCT/JP2023/024333
(87) International publication number: WO 2024/018873

(57) **Abstract**

A floating body of the present disclosure comprises: a tank that stores ammonia; a re-liquefaction device including a compressor that compresses gaseous ammonia in the tank, and a condenser that condenses and returns the ammonia compressed by the compressor to the tank; an ammonia-using device that is driven by an ammonia gas; an ammonia supply device including a supply line that supplies liquid ammonia in the tank to the ammonia-using device, and an evaporator that is provided on the supply line and evaporates the ammonia flowing in the supply line to generate ammonia gas; and a connection line that introduces the ammonia compressed by the compressor in the re-liquefaction device to the ammonia supply device.

## Description

### Technical Field

The present disclosure relates to a floating structure.

Priority is claimed on Japanese Patent Application No. 2022-115204 filed on July 20, 2022, the content of which is incorporated herein by reference.

### Background Art

In a ship that uses a liquefied gas such as LNG as fuel, the liquefied gas is vaporized due to natural heat input from the outside of a tank or heat input from equipment such as a pump in the tank storing the liquefied gas, and boil-off gas is generated. In a case where the boil-off gas in the tank increases, the pressure in the tank increases.

As a treatment of the boil-off gas in the tank for preventing the increase in the pressure in the tank, for example, there is an operation of compressing the boil-off gas with a compressor or the like and then supplying the compressed boil-off gas as fuel to an engine generator (motor generator), a boiler, a main engine, or the like, or an operation of condensing the boil-off gas with a re-liquefying device to re-liquefy the boil-off gas and returning the re-liquefied boil-off gas to the tank.

For example, PTL 1 discloses a ship that uses LNG as fuel for a marine engine. In PTL 1, the boil-off gas from the cargo tank is compressed by a gas compressor and supplied to a marine engine such as a boiler. In addition, the amount of the boil-off gas to be re-liquefied by the re-liquefying device is changed according to the operation state of the ship.

Meanwhile, in recent years, momentum to use decarbonized fuel is being rapidly increasing internationally, and the positive introduction of an ammonia co-firing boiler or the like in a coal-fired power plant is being considered. At the same time, in the field of a floating structure such as a ship, the positive introduction of ammonia, which is a decarbonized fuel, as a fuel for a main engine, an engine generator, or a boiler, which is a marine engine, is being considered. Therefore, realization of a floating structure that is driven by using ammonia as fuel or a floating structure that transports ammonia as a cargo is aimed at.

### Citation List

### Patent Literature

[PTL 1] Japanese Patent No. 6151207

### Summary of Invention

### Technical Problem

The above-described boil-off gas is also generated in a tank for storing liquefied ammonia which is one kind of liquefied gas. Therefore, it is considered to use the boil-off gas as fuel for a marine engine. However, since the latent heat of ammonia is larger than that of other liquefied gases such as LNG, the amount of the boil-off gas generated is smaller than that of other liquefied gases.

Therefore, in a case where the boil-off gas of the liquefied ammonia is used as the fuel for the marine engine as it is, the amount of the fuel may be insufficient with respect to the required amount. That is, it is currently difficult to use only the boil-off gas as the fuel.

Therefore, instead of the boil-off gas, the ammonia in the liquid phase may be taken out from the tank and vaporized by an evaporator or the like to obtain the ammonia gas as the fuel. In this case, since the boil-off gas is not consumed, it may be necessary to perform, for example, a process of re-liquefying the boil-off gas with a re-liquefying device in order to prevent the pressure in the tank from excessively increasing. However, in this case, while the ammonia in the liquid phase is vaporized by the evaporator, the boil-off gas is condensed by the re-liquefying device, and thus there is a problem that the energy efficiency is low.

The present disclosure is made to solve the above-described problems, and an object thereof is to provide a floating structure capable of improving energy efficiency. Solution to Problem

In order to achieve the above object, a floating structure according to the present disclosure includes a tank that stores ammonia, a re-liquefying device including a compressor that compresses ammonia in a vapor phase in the tank, and a condenser that condenses the ammonia compressed by the compressor and returns the condensed ammonia to the tank, an ammonia utilization equipment that is operated by an ammonia gas, an ammonia supply device including a first supply line that supplies ammonia in a liquid phase in the tank to the ammonia utilization equipment, and an evaporator that is provided in the first supply line and evaporates the ammonia flowing through the first supply line to generate the ammonia gas, and a connection line that introduces the ammonia compressed by the compressor in the re-liquefying device into the ammonia supply device.

In addition, a floating structure according to the present disclosure includes a tank that stores ammonia, an ammonia utilization equipment that is operated by an ammonia gas, an ammonia supply device including a first supply line that supplies ammonia in a liquid phase in the tank to the ammonia utilization equipment, and an evaporator that is provided in the first supply line and evaporates the ammonia flowing through the first supply line to generate the ammonia gas, a second supply line that supplies ammonia in a vapor phase in the tank to the ammonia supply device, and a compressor that compresses the ammonia flowing through the second supply line.

### Advantageous Effects of Invention

According to the present disclosure, it is possible to provide a floating structure that can improve energy efficiency.

### Brief Description of Drawings

Fig. 1 is a side view of a floating structure according to an embodiment of the present disclosure.
Fig. 2 is a diagram illustrating a treatment system for ammonia stored in a tank according to a first embodiment of the present disclosure.
Fig. 3 is a diagram illustrating a treatment system for ammonia stored in a tank according to a second embodiment of the present disclosure.
Fig. 4 is a diagram illustrating a treatment system for ammonia stored in a tank according to a third embodiment of the present disclosure.
Fig. 5 is a diagram illustrating a treatment system of ammonia stored in a tank according to another embodiment of the present disclosure.

### Description of Embodiments

Hereinafter, an embodiment of a floating structure according to the present disclosure will be described with reference to the accompanying drawings.

### <First Embodiment>

### [Floating Structure]

A floating structure in the present embodiment is a ship that uses a liquefied gas as fuel. Examples of the liquefied gas include ammonia (NH₃). A type of the ship is not limited to a specific type. Examples of the type of the ship include a liquefied gas carrier, a ferry, a RO-RO ship, a car carrier, a passenger ship, and the like.

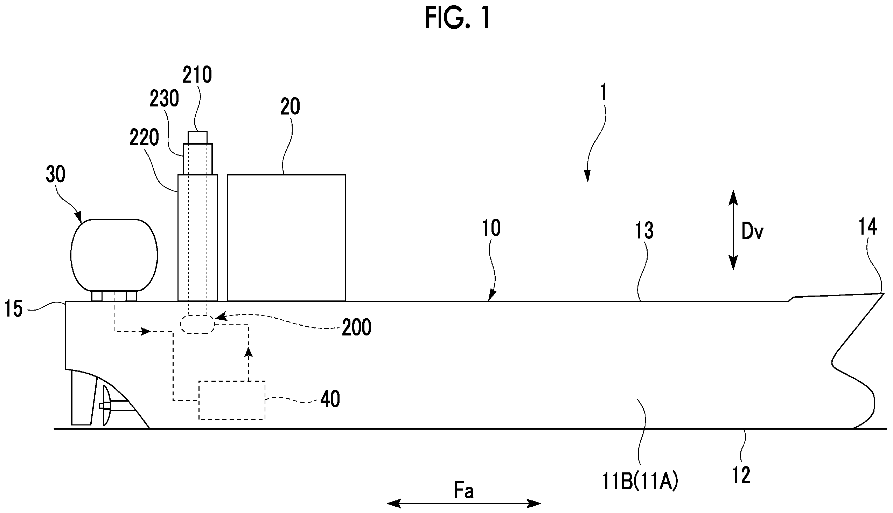

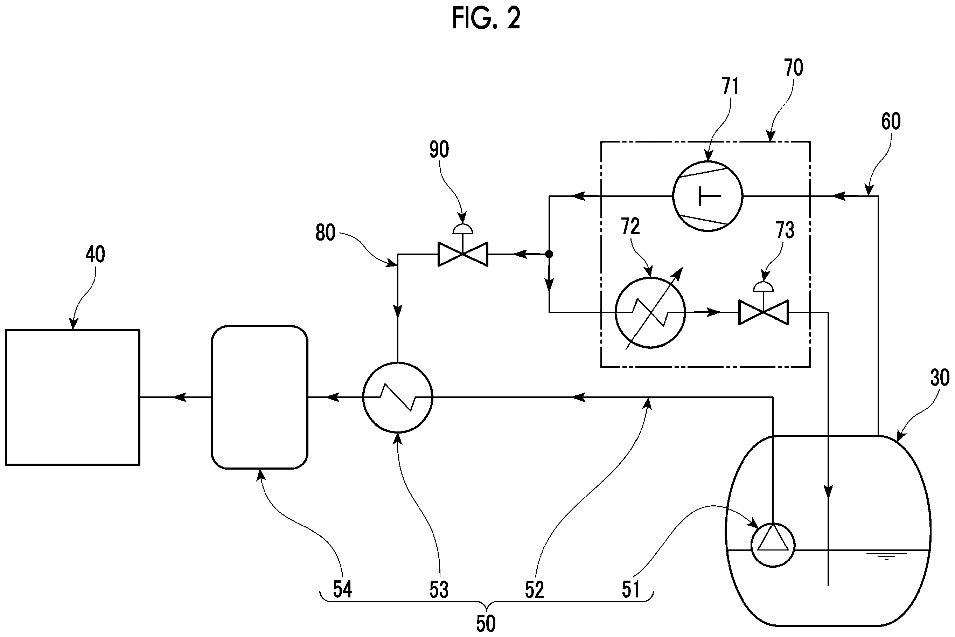

As shown in Figs. 1 and 2, the floating structure 1 includes a floating main structure 10, a superstructure 20, a tank 30, an ammonia utilization equipment 40, an ammonia supply device 50, a re-liquefying line 60, a re-liquefying device 70, a connection line 80, and an adjustment valve 90.

### (Floating Main Structure)

As shown in Fig. 1, the floating main structure 10 has broadsides 11A and 11B, a bottom 12, and an upper deck 13. The broadsides 11A and 11B include a pair of broadside plates that forms left and right broadsides 11A and 11B, respectively. The bottom 12 includes a bottom plate that connects the broadsides 11A and 11B. The upper deck 13 is provided over the pair of broadside plates.

An outer shell of the floating main structure 10 is formed by the broadsides 11A and 11B, the bottom 12, and the upper deck 13 to have a box shape in a cross-sectional view orthogonal to a bow-stern direction Fa. The bow-stern direction Fa in the present embodiment is a direction (left-right direction in the drawing) extending from a stern 15 to a bow 14 of the floating main structure 10.

### (Superstructure)

The superstructure 20 is a structure that is provided to face upward from the upper deck 13 in an up-down direction Dv. For example, the superstructure 20 has an accommodation space, a bridge, and the like.

### (Tank)

The tank 30 stores the liquefied ammonia as the fuel therein. The tank 30 accommodates ammonia in the liquid phase (liquefied ammonia) and ammonia in the vapor phase (boil-off gas) generated by vaporization of the ammonia in the liquid phase. For example, the tank 30 in the present embodiment is provided on an upper deck 13 on the stern 15 side in the bow-stern direction Fa with respect to the superstructure 20.

### (Ammonia Utilization Equipment)

The ammonia utilization equipment 40 is a device that generates thermal energy by combusting ammonia. The ammonia utilization equipment 40 is provided in, for example, a compartment such as an engine room (not shown) disposed inside the floating main structure 10.

Examples of the ammonia utilization equipment 40 include an engine generator that supplies electric power to the inside of the floating main structure 10 (inside the ship), a boiler that generates steam as an operating fluid, and a main engine that generates power for propelling the floating main structure 10. The ammonia utilization equipment 40 according to the present embodiment is an engine generator that uses gaseous ammonia as fuel. Hereinafter, the gaseous ammonia will be referred to as "ammonia gas", and the liquid ammonia will be referred to as "liquefied ammonia".

The exhaust gas discharged from the ammonia utilization equipment 40 by the combustion of the ammonia gas is purified by, for example, the exhaust gas purification device 200. The purified exhaust gas by the exhaust gas purification device 200 is released to the atmosphere through the gas duct 210 that penetrates the upper deck 13 and extends to the upper side in the up-down direction Dv in a state of being connected to the exhaust gas purification device 200.

A portion of the gas duct 210, which extends outside the floating main structure 10, is surrounded by an engine casing 220 and a funnel 230. For example, the gas duct 210, the engine casing 220, and the funnel 230 are disposed on the stern 15 side in the bow-stern direction Fa with respect to the superstructure 20.

### (Ammonia Supply Device)

As shown in Fig. 2, the ammonia supply device 50 is a device that supplies liquefied ammonia in the liquid phase in the tank 30 to the ammonia utilization equipment 40. The ammonia supply device 50 is disposed inside the floating main structure 10, for example.

The ammonia supply device 50 according to the present embodiment includes a pump 51, a first supply line 52, an evaporator 53, and a gas buffer chamber 54.

### (Pump)

The pump 51 can pump the liquefied ammonia in the liquid phase in the tank 30 to the outside of the tank 30. The pump 51 in the present embodiment is disposed inside the tank 30.

### (First Supply Line)

The first supply line 52 is a pipe that connects the ammonia utilization equipment 40 and the pump 51. The first supply line 52 supplies the liquefied ammonia pumped by the pump 51 to the ammonia utilization equipment 40 through the evaporator 53 and the gas buffer chamber 54.

Here, in the present embodiment, the pressure of the liquefied ammonia flowing in the first supply line 52 and pumped by the pump 51 is, for example, in a range of 2.0 to 3.0 MPaG. In addition, the temperature of the liquefied ammonia is, for example, in a range of -40°C to -30°C under the same pressure.

### (Evaporator)

The evaporator 53 is a heat exchanger that evaporates the liquefied ammonia flowing through the first supply line 52 to change the state of the ammonia into an ammonia gas. That is, the evaporator 53 generates ammonia gas from the liquefied ammonia in the tank 30. The evaporator 53 is provided in the first supply line 52. In addition, a heat source for heating the liquefied ammonia flowing through the first supply line 52 is supplied from the outside to the evaporator 53. Examples of the heat source supplied to the evaporator 53 include glycol water that is heated by collecting the heat discharge in the floating main structure 10 and the seawater around the floating main structure 10 that floats.

Here, the evaporator 53 has a function of mixing a fluid of a liquid supplied from the outside with a fluid of a gas supplied from the outside to obtain a fluid in a gas-liquid two-phase state. The evaporator 53 according to the present embodiment mixes the liquefied ammonia from the tank 30 that flows through the first supply line 52 with the ammonia gas that flows through the connection line 80 described below to obtain the ammonia in the gas-liquid two-phase state. The evaporator 53 generates an ammonia gas by performing heat exchange between the ammonia in the gas-liquid two-phase state and the heat source. An example of the evaporator 53 is a microchannel heat exchanger and the like.

### (Gas Buffer Chamber)

The gas buffer chamber 54 is a container having an internal space for temporarily storing the ammonia gas generated by the evaporator 53. Therefore, the ammonia gas generated by the evaporator 53 is introduced into the gas buffer chamber 54 through the first supply line 52 and is temporarily stored in the gas buffer chamber 54. The ammonia gas temporarily stored in the gas buffer chamber 54 is supplied to the ammonia utilization equipment 40 through the first supply line 52.

Here, in the present embodiment, the pressure of the ammonia gas stored in the gas buffer chamber 54 is, for example, in a range of 0.55 to 0.65 MPaG. In addition, the temperature of the ammonia gas is, for example, in a range of 15°C to 50°C under the same pressure.

### (Re-liquefying Line)

The re-liquefying line 60 leads out the ammonia gas in the vapor phase in the tank 30, which is the boil-off gas, to the outside of the tank 30. The re-liquefying line 60 according to the present embodiment is a pipe for guiding the ammonia gas from the vapor phase in the tank 30 to the re-liquefying device 70 and returning the liquefied ammonia re-liquefied by the re-liquefying device 70 to the tank 30. The re-liquefying line 60 according to the present embodiment is disposed inside the floating main structure 10, for example. Note that, the ammonia gas in the vapor phase in the tank 30 may be slightly mixed with an inert gas or the like.

One end of the re-liquefying line 60 is provided in the tank 30 so that the ammonia gas in the vapor phase in the tank 30 can be led out. The other end of the re-liquefying line 60 is immersed in the liquid phase in the tank 30, for example. Hereinafter, for convenience of description, a side of the one end of the re-liquefying line 60 is referred to as an "upstream side", and a side of the other end of the re-liquefying line 60 is referred to as a "downstream side".

### (Re-liquefying Device)

The re-liquefying device 70 is a device that re-liquefies the ammonia gas. The re-liquefying device 70 according to the present embodiment is disposed inside the floating main structure 10, for example.

The re-liquefying device 70 includes a compressor 71, a condenser 72, and an expansion valve 73.

### (Compressor)

The compressor 71 is a device that compresses the ammonia gas supplied from the tank 30 through the re-liquefying line 60. The compressor 71 is provided in the re-liquefying line 60. The compressor 71 compresses the ammonia gas supplied from the vapor phase in the tank 30 to a predetermined pressure. The ammonia gas compressed by the compressor 71 is discharged to the re-liquefying line 60 on the downstream side with respect to the compressor 71.

Here, the ammonia gas introduced into the compressor 71 is heated to a predetermined temperature by being compressed.

In the present embodiment, the pressure of the ammonia gas flowing through the re-liquefying line 60 toward the compressor 71 is, for example, in a range of 0 to 20 kPaG, and the temperature of the ammonia gas is, for example, in a range of -25°C to -15°C under the same pressure.

The temperature-pressure range of the ammonia gas can be changed depending on the type of the tank. For example, in a case where the tank 30 is a tank of the IMO tank-type A system, the pressure is, for example, in a range of 0 to 70 kPaG. In addition, in a case where the tank 30 is a tank of the IMO tank-type C system, the pressure is, for example, in a range of 0.2 to 0.7 MPaG. The "IMO tank-type A system" and the "IMO tank-type C system" referred to herein are defined by the International Gas Carrier (IGC) Code, which is a safety rule for liquefied gas established by the International Maritime Organization (IMO).

In addition, the pressure of the ammonia gas that is compressed by the compressor 71 and flows through the re-liquefying line 60 is, for example, in a range of 1.6 to 1.8 MPaG, and the temperature of the ammonia gas is, for example, in a range of 140°C to 160°C under the same pressure.

### (Condenser)

The condenser 72 is a heat exchanger that condenses the ammonia gas by cooling the ammonia gas compressed by the compressor 71. The condenser 72 is provided in the re-liquefying line 60 on the downstream side with respect to the compressor 71. A heat source for cooling the ammonia gas is supplied to the condenser 72 from the outside. Note that, an example of the heat source supplied to the condenser is the seawater around the floating main structure 10 that floats.

### (Expansion Valve)

The expansion valve 73 adiabatically expands the liquefied ammonia condensed by the condenser 72 to decrease the pressure and the temperature of the ammonia. The expansion valve 73 according to the present embodiment decreases the pressure and the temperature of the liquefied ammonia condensed by the condenser 72 to a pressure and a temperature at which the liquefied ammonia can be returned to the tank 30.

The expansion valve 73 is provided in the re-liquefying line 60 on the downstream side with respect to the condenser 72. The liquefied ammonia passing through the expansion valve 73 is guided into the tank 30 through the re-liquefying line 60 and is released into the liquid phase in the tank 30 from the other end of the re-liquefying line 60.

Here, in the present embodiment, the pressure of the liquefied ammonia returning to the tank 30 passing through the expansion valve 73 is, for example, in a range of 0 to 20 kPaG. In addition, the temperature of the liquefied ammonia returning to the tank 30 passing through the expansion valve 73 is, for example, in a range of -40°C to -30°C under the same pressure.

### (Connection Line)

The connection line 80 is a pipe for introducing the ammonia gas compressed by the compressor 71 of the re-liquefying device 70 into the ammonia supply device 50. The connection line 80 according to the present embodiment connects the re-liquefying line 60 between the compressor 71 and the condenser 72 and the evaporator 53 of the ammonia supply device 50.

### (Adjustment Valve)

The adjustment valve 90 is a valve that can block the flow of the ammonia gas flowing through the connection line 80 and can adjust the flow rate of the ammonia gas flowing through the connection line 80. The adjustment valve 90 is provided in the connection line 80. The adjustment valve 90 is set to an open state to allow the ammonia gas to flow through the connection line 80 and is set to a closed state to prevent the ammonia gas from flowing through the connection line 80. The operation of changing the opening degree of the adjustment valve 90 is performed manually by the crew member of the floating structure 1 or automatically.

Here, the ammonia gas flowing through the connection line 80 that has passed through the adjustment valve 90 joins the liquefied ammonia supplied from the tank 30 in the evaporator 53. The ammonia in the gas-liquid two-phase state that is joined in the evaporator 53 is heated by the heat source and is vaporized to become an ammonia gas. The ammonia gas is introduced into the gas buffer chamber 54 through the first supply line 52.

In the present embodiment, the pressure of the ammonia gas passing through the adjustment valve 90 toward the evaporator 53 is, for example, in a range of 0.5 to 0.7 MPaG. In addition, the temperature of the ammonia gas is, for example, in a range of 50°C to 100°C under the same pressure.

### (Actions and Effects)

In the above configuration, the ammonia gas compressed by the compressor 71 of the re-liquefying device 70 is introduced into the ammonia supply device 50 as fuel through the connection line 80. That is, since the boil-off gas from the tank 30 compressed by the compressor 71 of the re-liquefying device 70 can be effectively used, the amount of the liquefied ammonia supplied from the tank 30 to the evaporator 53 through the first supply line 52 can be reduced. Therefore, it is possible to reduce the amount of thermal energy required for vaporizing the liquefied ammonia in the evaporator 53. As a result, energy efficiency can be improved.

In addition, in the above configuration, the ammonia gas having a predetermined pressure and temperature by the compressor 71 joins the liquefied ammonia in the evaporator 53. Therefore, for example, even in a case where the flow rate or the flow velocity of the liquefied ammonia flowing through the first supply line 52 from the tank 30 toward the evaporator 53 is changed, the temperature of the ammonia gas flowing out from the evaporator 53 can be kept more constant. Therefore, it is possible to supply ammonia gas having a more stable temperature to the ammonia utilization equipment 40.

In addition, in the above-described configuration, the adjustment valve 90 is provided in the connection line 80. Therefore, for example, in a case where the amount of the ammonia gas stored in the gas buffer chamber 54 is sufficient or in a case where the internal pressure of the tank 30 is low, the adjustment valve 90 is set to a closed state in which the introduction of the ammonia gas in the vapor phase in the tank 30 into the evaporator 53 can be stopped. Further, by stopping the introduction of the ammonia gas into the evaporator 53 and introducing the ammonia gas into the condenser 72 provided in the re-liquefying line 60, it is possible to continue the control of the internal pressure of the tank 30. Therefore, it is possible to realize an appropriate operation according to the situation. In addition, by adjusting the opening degree of the adjustment valve 90, the amount of the liquefied ammonia sent to the evaporator 53 through the connection line 80 can be adjusted.

In addition, in the above configuration, the gas buffer chamber 54 capable of storing the ammonia gas from the evaporator 53 is provided in the first supply line 52. Therefore, for example, even in a case where the amount of the ammonia gas consumed by the ammonia utilization equipment 40 is changed, it is possible to continuously supply the amount of the ammonia gas required for the ammonia utilization equipment 40 from the gas buffer chamber 54 to the ammonia utilization equipment 40.

### <Second Embodiment>

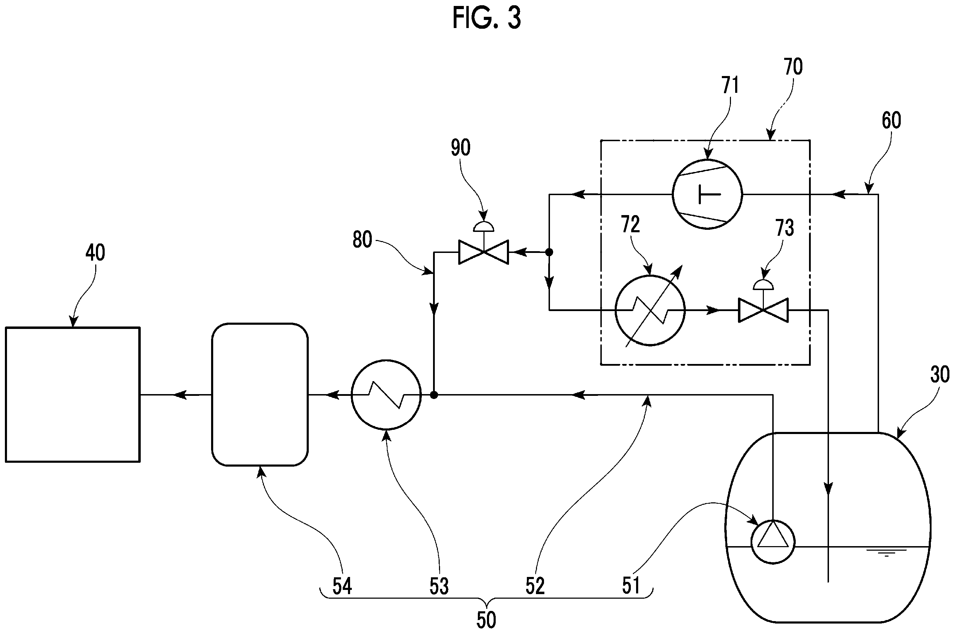

Next, a second embodiment of the floating structure 1 according to the present disclosure will be described with reference Fig. 3. In the second embodiment described below, the same reference numerals will be assigned to configurations common to those of the above-described first embodiment in the drawings, and description thereof will be omitted. In the second embodiment, the connection point between the connection line 80 and the ammonia supply device 50 is different from the connection point between the connection line 80 and the ammonia supply device 50 described in the first embodiment.

### (Connection Line)

The connection line 80 according to the present embodiment connects the re-liquefying line 60 between the compressor 71 and the condenser 72 and the first supply line 52 on the tank 30 side with respect to the evaporator 53 in the ammonia supply device 50.

### (Actions and Effects)

In this configuration, the ammonia gas having a predetermined pressure and temperature is caused to flow into the first supply line 52 through which the liquefied ammonia flows, by the compressor 71. The ammonia that is joined in the first supply line 52 and is in the gas-liquid two-phase state is supplied to the evaporator 53. Therefore, for example, even in a case where the flow rate or the flow velocity of the liquefied ammonia flowing through the first supply line 52 from the tank 30 toward the evaporator 53 is changed, the temperature of the ammonia gas flowing out from the evaporator 53 can be kept more constant. Therefore, it is possible to supply ammonia gas having a more stable temperature to the ammonia utilization equipment 40.

In addition, the ammonia gas joins the liquefied ammonia in the first supply line 52, and the ammonia gas is heated or cooled (heat-exchanged) from the liquefied ammonia, so that a part of the ammonia gas becomes the liquefied ammonia. Accordingly, the proportion of the liquefied ammonia in the ammonia flowing through the first supply line 52 can be increased. Therefore, more ammonia gas can be generated in the evaporator 53.

Further, in this configuration, for example, even in a case where one evaporator 53 having an inlet portion capable of receiving ammonia is used as an existing equipment, the influence on the specification of the evaporator 53 is small in a case of adding the connection line 80. Therefore, it is possible to suppress the cost in a case of adding the connection line 80.

### <Third Embodiment>

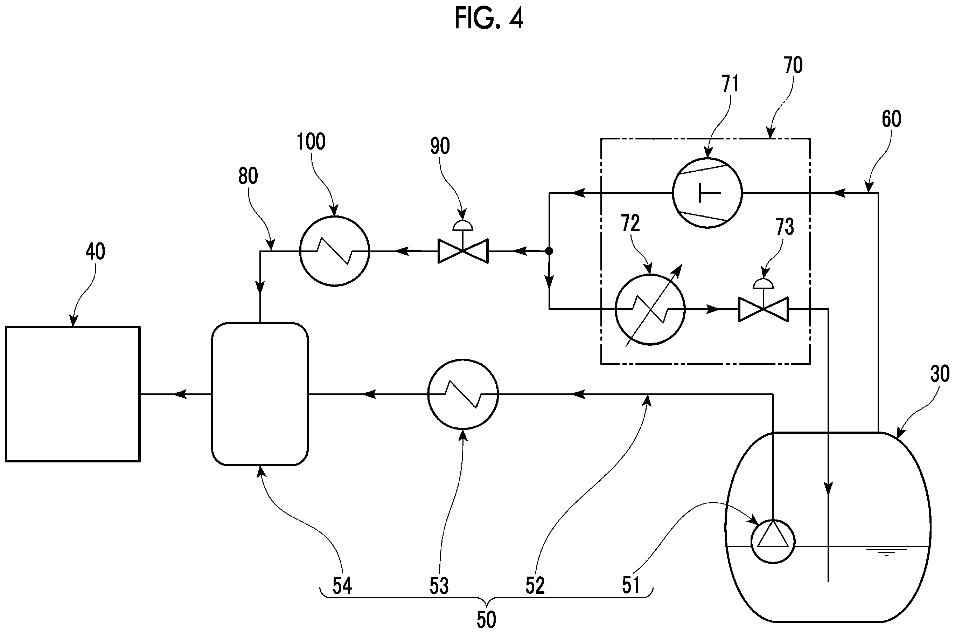

Next, a third embodiment of the floating structure 1 according to the present disclosure will be described with reference Fig. 4. In the second embodiment described below, the same reference numerals will be assigned to configurations common to those of the above-described first embodiment in the drawings, and description thereof will be omitted. In the second embodiment, the connection point between the connection line 80 and the ammonia supply device 50 is different from the connection point between the connection line 80 and the ammonia supply device 50 described in the first embodiment. In addition, the floating structure 1 described in the third embodiment further includes a heat exchanger 100.

### (Connection Line)

The connection line 80 according to the present embodiment connects the re-liquefying line 60 between the compressor 71 and the condenser 72 and the gas buffer chamber 54 of the ammonia supply device 50.

### (Heat Exchanger)

The heat exchanger 100 changes the ammonia gas compressed by the compressor 71 into the ammonia gas at a target temperature. The heat exchanger 100 is provided in the connection line 80 on the gas buffer chamber 54 side with respect to the adjustment valve 90. A heat source for adjusting the ammonia gas flowing through the connection line 80 to a suitable temperature required by the ammonia utilization equipment 40 is supplied from the outside to the heat exchanger 100. Examples of the heat source supplied to the heat exchanger 100 include glycol water that is heated by collecting the heat discharge in the floating main structure 10, and the seawater around the floating main structure 10 that floats. The ammonia gas flowing out from the heat exchanger 100 is introduced into the gas buffer chamber 54 through the connection line 80.

### (Actions and Effects)

In this configuration, the ammonia gas having the target temperature by the heat exchanger 100 is introduced into the gas buffer chamber 54 and joins the ammonia gas from the evaporator 53. Therefore, for example, even in a case where the temperature or the pressure of the ammonia gas from the evaporator 53 changes due to a change in the flow rate or the flow velocity of the liquefied ammonia flowing through the first supply line 52, the temperature of the ammonia gas to be finally supplied from the gas buffer chamber 54 to the ammonia utilization equipment 40 can be kept more constant. Therefore, it is possible to supply ammonia gas having a more stable temperature to the ammonia utilization equipment 40.

### (Other Embodiments)

The embodiment of the present disclosure has been described in detail above with reference to the drawings. However, a specific configuration is not limited to the configuration of the embodiment, and additions, omissions, and substitutions of components and other modifications can be made without departing from the scope of the present disclosure.

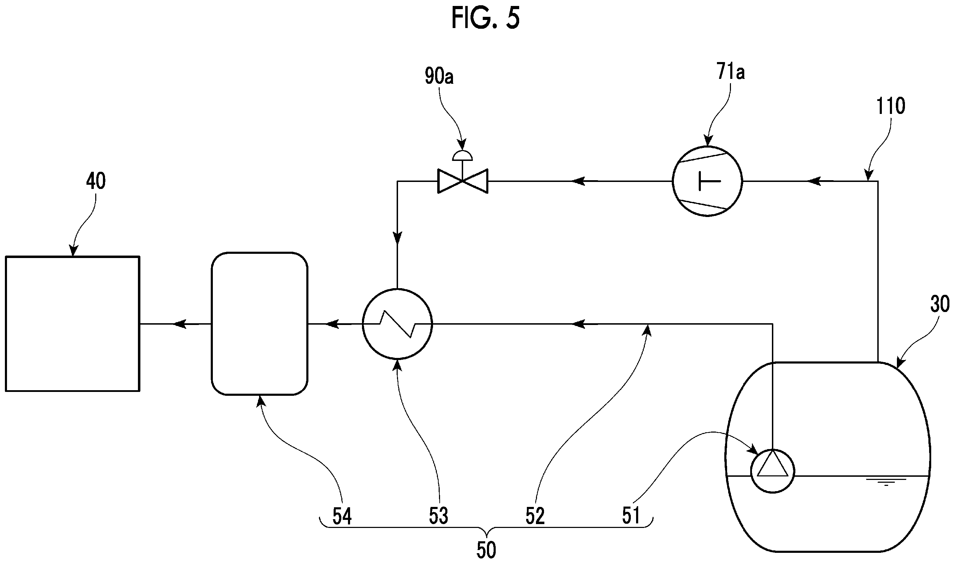

For example, as shown in Fig. 5, the floating structure 1 does not include the re-liquefying line 60, the re-liquefying device 70, the connection line 80, and the adjustment valve 90 as described above, and may include a second supply line 110, a compressor 71a, and an adjustment valve 90a instead of the re-liquefying line 60, the re-liquefying device 70, the connection line 80, and the adjustment valve 90.

Hereinafter, the configuration of the second supply line 110, the compressor 71a, and the adjustment valve 90a will be described.

The second supply line 110 is a pipe for supplying the ammonia gas, which is the boil-off gas in the tank 30, to the ammonia supply device 50. The second supply line 110 is disposed inside the floating main structure 10, for example. One end of the second supply line 110 is provided in the tank 30 so that the ammonia in the vapor phase in the tank 30 can be led out. The other end of the second supply line 110 is connected to the evaporator 53 of the ammonia supply device 50.

The compressor 71a is a device that compresses the ammonia gas flowing from the tank 30 through the second supply line 110. The compressor 71a is provided in the second supply line 110. The compressor 71a compresses the ammonia gas to a predetermined pressure, and discharges the compressed ammonia gas to the second supply line 110 on the evaporator 53 side with respect to the compressor 71a.

The adjustment valve 90a is a valve that can block the flow of the ammonia gas flowing through the second supply line 110 and can adjust the flow rate of the ammonia gas flowing through the second supply line 110. The adjustment valve 90a is provided in the second supply line 110 between the compressor 71a and the evaporator 53. The adjustment valve 90a is set to an open state to allow the ammonia gas to flow through the second supply line 110 and is set to a closed state to prevent the ammonia gas from flowing through the second supply line 110. An operation of changing the opening degree of the adjustment valve 90a is performed manually by the crew member of the floating structure 1 or automatically.

The configuration described above can also achieve the actions and effects described in the first embodiment.

Although not shown, the other end of the second supply line 110 may be connected to, for example, the first supply line 52 on the upstream side with respect to the evaporator 53.

In addition, the other end of the second supply line 110 may be connected to, for example, the gas buffer chamber 54. In a case where the other end of the second supply line 110 is connected to the gas buffer chamber 54, the heat exchanger 100 may be provided in the second supply line 110.

In addition, in the embodiment described above, the configuration in which the tank 30 is provided on the upper deck 13 has been described, but the present disclosure is not limited to this configuration. The tank 30 may be provided inside the floating main structure 10.

In addition, in the embodiment described above, the tank 30 has been described as an example of the tank that stores the fuel. However, the tank that stores the fuel is not limited to the fuel-dedicated tank 30. For example, the tank that stores the fuel may be a tank (cargo tank) that stores the liquefied gas as the cargo disposed in the cargo hold or the like in the floating main structure 10.

In addition, the floating structure 1 described in the above embodiment is the ship that uses the ammonia as the fuel. However, the fuel is not limited the ammonia. The floating structure 1 may use liquefied gas such as LNG or LPG as fuel. In addition, the floating structure 1 is not limited to the ship, and may be a Floating Storage and Regasification Unit (FSRU) or Floating Storage Unit (FSU) instead of the ship.

In addition, the configurations of the floating structure 1 described in the above embodiment are not limited to the independent configurations. The floating structure 1 may be configured by appropriately combining the configuration elements described in the respective embodiments.

### <Additional Notes>

For example, the floating structure described in each of the embodiments is understood as follows.

(1) The floating structure 1 according to a first aspect includes a tank 30 that stores ammonia, a re-liquefying device 70 including a compressor 71 that compresses ammonia in a vapor phase in the tank 30, and a condenser 72 that condenses the ammonia compressed by the compressor 71 and returns the condensed ammonia to the tank 30, an ammonia utilization equipment 40 that is operated by an ammonia gas, an ammonia supply device 50 including a first supply line 52 that supplies ammonia in a liquid phase in the tank 30 to the ammonia utilization equipment 40, and an evaporator 53 that is provided in the first supply line 52 and evaporates the ammonia flowing through the first supply line 52 to generate the ammonia gas, and a connection line 80 that introduces the ammonia compressed by the compressor 71 in the re-liquefying device 70 into the ammonia supply device 50.
   Accordingly, since the ammonia compressed by the compressor 71 of the re-liquefying device 70 can be effectively used by the ammonia supply device 50, the amount of ammonia from the tank 30 evaporated by the evaporator 53 can be reduced.
(2) The floating structure 1 according to a second aspect is the floating structure 1 according to the first aspect, in which the connection line 80 may introduce the ammonia compressed by the compressor 71 into the evaporator 53.
   As a result, the ammonia having a predetermined pressure and temperature by the compressor 71 joins the ammonia from the tank 30 in the evaporator 53. Therefore, for example, even in a case where the flow rate or the flow velocity of the ammonia flowing through the first supply line 52 from the tank 30 toward the evaporator 53 is changed, the temperature of the ammonia gas flowing out from the evaporator 53 can be kept more constant.
(3) The floating structure 1 according to a third aspect is the floating structure 1 according to the first aspect, in which the connection line 80 may introduce the ammonia compressed by the compressor 71 into the first supply line 52 on the tank 30 side with respect to the evaporator 53.

As a result, the ammonia having a predetermined pressure and temperature by the compressor 71 flows into the first supply line 52 and joins the ammonia from the tank 30, and is then supplied to the evaporator 53 through the first supply line 52. Therefore, for example, even in a case where the flow rate or the flow velocity of the ammonia flowing through the first supply line 52 from the tank 30 toward the evaporator 53 is changed, the temperature of the ammonia gas flowing out from the evaporator 53 can be kept more constant.

In addition, for example, even in a case where one evaporator 53 having an inlet portion capable of receiving ammonia is used, the specification or the like of the evaporator 53 does not need to be changed in a case of adding the connection line 80.

(4) The floating structure 1 according to a fourth aspect is the floating structure 1 according to the first aspect, further including a heat exchanger 100 that changes the ammonia compressed by the compressor 71 into the ammonia gas at a target temperature, in which the ammonia supply device 50 may further include a gas buffer chamber 54 that is provided in the first supply line 52 between the evaporator 53 and the ammonia utilization equipment 40 and that is capable of storing the ammonia gas, and the connection line 80 may introduce the ammonia gas changed to the target temperature by the heat exchanger 100 into the gas buffer chamber 54.

As a result, the ammonia gas having the target temperature by the heat exchanger 100 is introduced into the gas buffer chamber 54 and joins the ammonia gas from the evaporator 53. Therefore, for example, even in a case where the temperature or the pressure of the ammonia gas from the evaporator 53 changes due to the flow rate or the flow velocity of the ammonia flowing through the first supply line 52, the temperature of the ammonia gas to be finally supplied from the gas buffer chamber 54 to the ammonia utilization equipment 40 can be kept more constant.

In addition, for example, even in a case where the amount of the ammonia gas consumed by the ammonia utilization equipment 40 is changed, it is possible to continuously supply the amount of the ammonia gas required for the ammonia utilization equipment 40 from the gas buffer chamber 54.

(5) The floating structure 1 according to a fifth aspect is the floating structure 1 according to any one of the first to the fourth aspects, further including an adjustment valve 90 that is capable of blocking a flow of the ammonia in the connection line 80 and that is capable of adjusting a flow rate of the ammonia flowing through in the connection line 80.

Accordingly, for example, in a case where the amount of the ammonia gas stored in the gas buffer chamber 54 is sufficient or in a case where the internal pressure of the tank 30 is low, the adjustment valve 90 is set to a closed state in which the introduction of the ammonia in the vapor phase in the tank 30 into the evaporator 53 can be stopped.

In addition, by adjusting the opening degree of the adjustment valve 90, the flow rate of the ammonia sent to the evaporator 53 through the connection line 80 can be adjusted.

(6) The floating structure 1 according to a sixth aspect includes a tank 30 that stores ammonia, an ammonia utilization equipment 40 that is operated by an ammonia gas, an ammonia supply device 50 including a first supply line 52 that supplies ammonia in a liquid phase in the tank 30 to the ammonia utilization equipment 40, and an evaporator 53 that is provided in the first supply line 52 and evaporates the ammonia flowing through the first supply line 52 to generate the ammonia gas, a second supply line 110 that supplies ammonia in a vapor phase in the tank 30 to the ammonia supply device 50, and a compressor 71a that compresses the ammonia flowing through the second supply line 110.

Accordingly, since the ammonia in the vapor phase in the tank 30 is used, the amount of ammonia from the tank 30 to the evaporator 53 of the ammonia supply device 50 can be reduced. That is, the amount of ammonia from the tank 30 evaporated by the evaporator 53 can be reduced.

### Reference Signs List

1: floating structure
30: tank
40: ammonia utilization equipment
50: ammonia supply device
52: first supply line
53: evaporator
54: gas buffer chamber
70: re-liquefying device
71, 71a: compressor
80: connection line
90, 90a: adjustment valve
100: heat exchanger
110: second supply line

## Claims

1. A floating structure comprising:
a tank that stores ammonia;
a re-liquefying device including a compressor that compresses ammonia in a vapor phase in the tank, and a condenser that condenses the ammonia compressed by the compressor and returns the condensed ammonia to the tank;
an ammonia utilization equipment that is operated by an ammonia gas;
an ammonia supply device including a first supply line that supplies ammonia in a liquid phase in the tank to the ammonia utilization equipment, and an evaporator that is provided in the first supply line and evaporates the ammonia flowing through the first supply line to generate the ammonia gas; and
a connection line that introduces the ammonia compressed by the compressor in the re-liquefying device into the ammonia supply device.

2. The floating structure according to claim 1,
wherein the connection line introduces the ammonia compressed by the compressor into the evaporator.

3. The floating structure according to claim 1,
wherein the connection line introduces the ammonia compressed by the compressor into the first supply line on a tank side with respect to the evaporator.

4. The floating structure according to claim 1, further comprising:
a heat exchanger that changes the ammonia compressed by the compressor into the ammonia gas at a target temperature,
wherein the ammonia supply device further includes a gas buffer chamber that is provided in the first supply line between the evaporator and the ammonia utilization equipment and that is capable of storing the ammonia gas, and
the connection line introduces the ammonia gas changed to the target temperature by the heat exchanger into the gas buffer chamber.

5. The floating structure according to any one of claims 1 to 4, further comprising:
an adjustment valve that is capable of blocking a flow of the ammonia in the connection line and that is capable of adjusting a flow rate of the ammonia flowing through the connection line.

6. A floating structure comprising:
a tank that stores ammonia;
an ammonia utilization equipment that is operated by an ammonia gas;
an ammonia supply device including a first supply line that supplies ammonia in a liquid phase in the tank to the ammonia utilization equipment, and an evaporator that is provided in the first supply line and evaporates the ammonia flowing through the first supply line to generate the ammonia gas;
a second supply line that supplies ammonia in a vapor phase in the tank to the ammonia supply device; and
a compressor that compresses the ammonia flowing through the second supply line.
